# EUROPEAN PATENT APPLICATION

(11) **EP 4 744 966 A1**
(43) Date of publication of application: **20.05.2026**
(21) Application number: 24213068.0
(22) Date of filing: 14.11.2024
(51) Int. Cl.: B60Q 9/00, B60W 50/14

(54) **METHOD, COMPUTER PROGRAM, APPARATUSES AND SYSTEMS FOR ASSISTING A DRIVER OF A VEHICLE VIA A HEAD-MOUNTED PORTABLE SYSTEM.**

(71) Applicant: Volvo Car Corporation, 405 31 Göteborg (SE)
(72) Inventor: NILSSON, Jan, 40531 Göteborg (SE)
(74) Representative: Kransell & Wennborg KB

(57) **Abstract**

The disclosure relates to a method for assisting a driver of a vehicle via a head-mounted portable system, wherein the method comprises: obtaining information indicative of a surrounding of the vehicle; causing outputting, via the head-mounted portable system, at least one spatial indication associated to at least a portion of the surrounding, wherein the spatial indication comprises an audible and/or visual spatial indication. The disclosure further relates to a corresponding data processing apparatus, a corresponding computer program, and a corresponding computer-readable storage medium. Additionally, the disclosure relates to a head-mounted portable system, a vehicle, and a system comprising the head-mounted portable system and the vehicle.

## Description

### TECHNICAL FIELD

The present disclosure relates to a method for assisting a driver of a vehicle via a head-mounted portable system.

Furthermore, the present disclosure is directed to a data processing apparatus, a computer program, and a computer-readable storage medium.

The present disclosure is also related to a head-mounted portable system, a vehicle, and a system comprising the head-mounted portable system and the vehicle.

### BACKGROUND ART

In traffic, vehicles provide drivers visual and auditory signals for enabling the drivers to perceive what is going on in their surroundings and to be able to react to the respective traffic situations if necessary. However, the signals may distract driver attention from traffic. A driver of a vehicle may not recognize the context of the signal(s), which in a traffic setting might be dangerous since situation awareness is affected negatively. Instead of being assisted in a particular driving situation, the driver can be prevented from reacting correctly immediately.

### SUMMARY

It is an objective of the present disclosure to improve assistance provided to a driver of a vehicle while driving.

The problem is at least partially solved or alleviated by the subject matter of the independent claims of the present disclosure, wherein further examples are incorporated in the dependent claims.

According to a first aspect, there is provided a method for assisting a driver of a vehicle via a head-mounted portable system. The method of the first aspect comprises: obtaining information indicative of a surrounding of the vehicle; causing outputting, via the head-mounted portable system, at least one spatial indication associated to at least a portion of the surrounding of the vehicle, wherein the spatial indication comprises an audible and/or visual spatial indication.

The surrounding of the vehicle may be associated with various conditions and/or physical objects/elements (such as other vehicles, traffic participants, objects on or adjacent to the road, traffic signs, etc.) in the environment of the vehicle, and/or states of the vehicle that influence the driving of the vehicle, vehicle's operation, and/or driver's safety. Further, the surrounding of the vehicle may relate to the immediate environment around the vehicle, the broader roadway conditions, and/or vehicle's operating, states, or conditions respectively. Being aware of vehicle's surrounding is essential for safe driving.

The information indicative of the surrounding of the vehicle may indicate at least a portion of the surrounding of the vehicle that the driver should take into consideration when driving the vehicle. According to the present disclosure, the information indicative of the surrounding of the vehicle may, for example, indicate a particular situation, which is associated with the vehicle and which the driver of the vehicle should take into account when driving. The particular situation may be a driving relevant situation, e.g. may be relevant for or further driving behavior or may have influence on further driving behavior. For example, the particular situation may be a critical driving situation. The information may indicate, for example, at least one safety risk arising from at least one of the following: the surrounding traffic; the state or condition of the vehicle; the surrounding of the vehicle; and/or the state of the road, on which the vehicle is driving. Additionally, the information indicative of the surrounding of the vehicle may comprise information indicating a location in the surrounding of the vehicle. The indicated location of the surrounding may be associated with the particular situation. For example, the location of the surrounding may indicate where in the surrounding of the vehicle the particular situation arises or has its origin. The location may be indicated in different well-known ways. For example, the location may be indicated by: coordinates; directional indication in relation to the vehicle and/or in relation to the direction of travel of the vehicle; etc.

A spatial indication may indicate at least a portion of the surrounding of the vehicle, to which the driver should/has to pay attention from the perspective of the driver. Spatial indications (feedbacks) are as such well-known and refer to information or signals that provide directional and/or location-based cues about an environment such as the surrounding of a vehicle. The outputting of the spatial indication enhances driver's awareness by presenting information in a way that corresponds to the actual physical surroundings of the vehicle from the perspective of the driver. The spatial indication may directly and promptly assist the driver in various driving situations. It may enable the driver to recognize quickly from the perspective of the driver the location and/or direction in the vehicle's surrounding to which driver's attention should be paid. This may be of great importance in critical traffic situations. The portion of the surrounding of the vehicle, to which the driver should/has to pay attention from the perspective of the driver, may correspond to (e.g., overlap and/or be the same as) the location in the surrounding of the vehicle provided with the information indicative of the surrounding of the vehicle. The portion of the surrounding of the vehicle may indicate a portion of the surrounding where the situation, which is associated with the vehicle and which the driver of the vehicle should take into account when driving, arises or has its origin.

An implementation of the first aspect enables the driver of a vehicle to immediately and correctly recognize different driving-relevant situations, which may be critical and, thus, safety-relevant, and/or locations of the driving-relevant situations in the surrounding of the vehicle.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the method comprises obtaining head-tracking information indicative of a position, orientation, and/or movement of the head of the driver. According to the example, the outputting of the at least one spatial indication may be based on the position, orientation, and/or movement of the head of the driver. This improves driver's recognition of the driving-relevant situations and/or their locations because changes in the position, orientation, and/or movement of the head of the driver may negatively influence driver's perception when indications on driving-relevant situations and/or their locations are output at predetermined locations. The outputs of the indications may no longer be aligned with the actually relevant portions of the surrounding of the vehicle.

According to an example, the vehicle is a micro-mobility vehicle or a mini-mobility vehicle. Generally, micro-mobility and mini-mobility vehicles are well known. Micro-mobility vehicles are generally electrically motorized and non-motorized micro and light vehicles, also known as light electric vehicles (LEVs). A micro-mobility vehicle is, for example, a bicycle, an e-bike, an e-scooter, a kick scooter, an e-moped, a segway, a light electric vehicle, a hoverboard, a monowheel, an e-skateboards, a classic skateboards, etc., wherein the present disclosure is implementable with regard to any of the different kinds of micro-motility vehicles and is not limited to a particular kind of micro-mobility vehicles. Mini-mobility vehicles are small electric vehicles that fall between traditional cars and micro-mobility vehicles. They are smaller than standard cars but larger than the micro-mobility vehicles. Typically, they have two, three or four wheels and are designed to accommodate one or two passengers, making them ideal, for example, for short-distance travel in urban environments. A mini-mobility vehicle is, for example, a Neighborhood Electric Vehicle (NEV), a microcar, or a cargo vehicle, wherein the present disclosure is implementable with regard to any of the different kinds of mini-motility vehicles and is not limited to a particular kind of mini-mobility vehicles.

Vehicles such as standard cars comprise different safety systems and, as such, with their stable carrosseries offer a certain aspect of safety. With regard to micro-mobility vehicles and mini-mobility vehicles, the situation is different. The present disclosure improves safety of drivers driving micro-mobility or mini-mobility vehicles.

According to an example, the head-mounted portable system is integrated in or is arrangeable to a helmet, arranged for safeguarding from injuries the head of the driver of the vehicle. In this way, the user does not need to use two different devices or systems when driving the vehicle. The head-mounted portable system and the helmet may be combined to a single arrangement assisting and safeguarding the driver.

According to an example, the visual spatial indication is output by a displaying device of the head-mounted portable system. According to a further example, the displaying device is a head-up display or an augmented reality, AR, head-up display.

According to an example, the information comprises information generated based on at least one of the following: light detection and ranging, LiDAR, information; sensor information, obtained from at least one sensor of the vehicle; state information, obtained from at least one component of the vehicle and indicative of state of the vehicle; vehicle-to-everything, V2X, information; and/or image information, obtained from at least one camera of the vehicle. Thereby, the information indicative of the surrounding of the vehicle is generatable on different kinds of information, obtained from different sources and reflecting different aspects in the surrounding of the vehicle including the vehicle itself. The information, thus, provides a good insight into the surrounding of the vehicle and enables assisting the driver by taking into consideration maximum available surrounding information.

According to a second aspect, there is provided a data processing apparatus comprising means for carrying out the steps of the method of the first aspect.

According to a third aspect, there is provided a computer program comprising instructions which, when the program is executed by a computer, cause the computer to carry out the steps of the method of the first aspect.

According to a fourth aspect, there is provided a computer readable medium comprising instructions which, when executed by a computer, cause the computer to carry out the steps of the method according to the first aspect.

According to a fifth aspect, there is provided a head-mounted portable system comprising a data processing apparatus according to the second aspect or means for carrying out the steps of the method according to the first aspect.

According to a sixth aspect, there is provided a vehicle arranged for: obtaining information indicative of a surrounding of the vehicle; and causing a head-mounted portable system to carry out the steps of a method according to any one of claims 1 to 8 by providing the information to the head-mounted portable system.

According to an example, the vehicle comprises: at least one component configured for obtaining light detection and ranging, LiDAR, information; at least one sensor configured for obtaining sensor information; at least one component configured for obtaining information indicative of a state of the vehicle; at least one communication system configured for obtaining vehicle-to-everything, V2X, information; and/or at least one camera for obtaining image information.

According to a seventh aspect, there is provided a system comprising the vehicle according to the sixth aspect and the head-mounted portable system according to the fifth aspect.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an arrangement of devices operating according to an example of the present disclosure;
- Figure 2A: shows an arrangement of information indicative of a surrounding of a vehicle according to an example of the present disclosure;
- Figure 2B: shows an arrangement of information indicative of a surrounding of a vehicle according to an example of the present disclosure;
- Figure 2C: shows an arrangement of information indicative of a surrounding of a vehicle according to an example of the present disclosure;
- Figure 3A: shows outputting of at least one spatial indication according to an example of the present disclosure;
- Figure 3B: shows outputting of at least one spatial indication according to an example of the present disclosure;
- Figure 4: shows an arrangement of the data processing apparatus according to an example of the present disclosure;
- Figure 5A: shows steps of a method for assisting a driver of a vehicle via a head-mounted portable system according to an example of the present disclosure;
- Figure 5B: shows steps of a method for assisting a driver of a vehicle via a head-mounted portable system according to an example of the present disclosure;
- Figure 6: visualizes an exemplary processing device for providing information indicative of surrounding of a vehicle to a data processing apparatus according to an example of the present disclosure;
- Figure 7A: visualizes an exemplary arrangement of a vehicle according to an example of the present disclosure; and
- Figure 7B: visualizes an exemplary arrangement of a vehicle according to an example of the present disclosure.

### DETAILED DESCRIPTION

The Figures are merely schematic representations and serve only to illustrate examples of the disclosure. Identical or equivalent elements are in principle provided with the same reference signs.

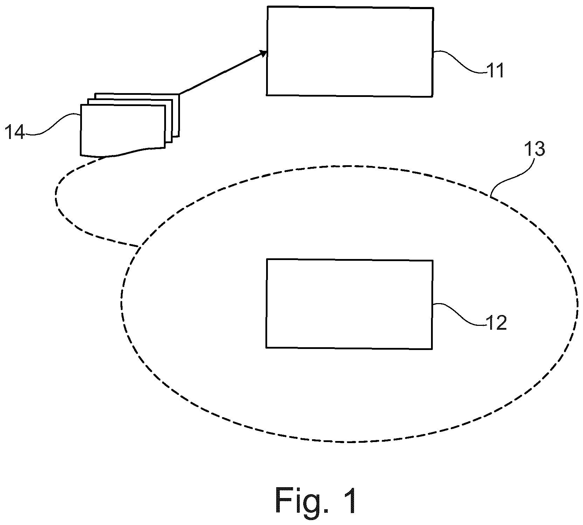

Figure 1 shows an arrangement of devices operating according to an example of the present disclosure. In Figure 1, a driver is driving a vehicle 12. The vehicle 12 is, for example, a micro-mobility vehicle or a mini-mobility vehicle. A data processing apparatus 11 is arranged to obtain information 14 indicative of a surrounding 13 of the vehicle 12. The information 14 indicative of the surrounding 13 of the vehicle 12 may indicate a location in the surrounding 13 of the vehicle 12, which the driver should take into consideration when driving the vehicle 12, and/or a situation, which is associated with the vehicle 12. The situation might be also one which the driver of the vehicle 12 should take into account when driving. The situation may reflect at least one of: a state of the vehicle 12; a traffic situation relating to the vehicle 12 (e.g., relating to the safety of the vehicle 12).

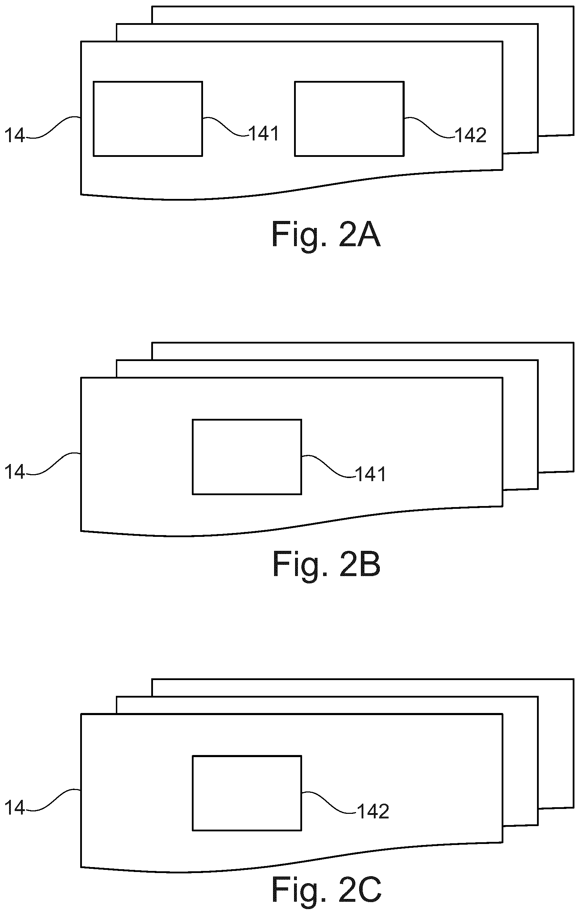

Figures 2A, 2B, and 2C show arrangements of information 14 indicative of a surrounding 13 of a vehicle 12 according to possible examples of the present disclosure.

According to Figure 2A, the information 14 indicative of the surrounding 13 of the vehicle 12 may, for example, comprise data 141 indicative of a particular situation, which is associated with the vehicle 12 and which the driver of the vehicle 12 should take into account when driving. The particular situation may be a driving relevant situation, e.g. may be relevant for or further driving behavior or may have influence on further driving behavior. For example, the particular situation may be a critical driving situation. The particular situation may also indicate vehicle's state, for example. The data 141 may, for example, indicate at least one safety risk arising from at least one of the following: the surrounding traffic; the state or condition of the vehicle 12; the surrounding of the vehicle 12; and/or the state of the road, on which the vehicle 12 is driving.

For example, the data 141 may indicate, as the particular situation associated with the vehicle 12, that: another vehicle is approaching the vehicle 12; a distance between the vehicle 12 and the another vehicle can become critical; the vehicle 12 is breaking too hard; a component of the vehicle 12 is not working properly; the vehicle 12 approaches a traffic jam; the surface of the road, on which the vehicle 12 is driving, is slippery; or the road is difficult to drive on or in poor condition. Many other situations associated with the vehicle 12 may be provided with the data 141 and, thus, indicated in the information 14 indicative of the surrounding 13 of the vehicle 12.

Additionally, the information 14 indicative of the surrounding of the vehicle 12 may comprise data 142 indicative of a location in the surrounding 13 of the vehicle 12, to which attention should be paid when driving (e.g., for safety reasons). The location may be, for example, a location of another vehicle approaching the vehicle 12, a location of an object that may influence a safe driving of the vehicle 12 (e.g., a person, an animal, and/or another object on or near the road. Thus, the location may indicate location of any object or circumstance that may (e.g., negatively) influence the driving (e.g., the driving safety).

Data 141 and data 142 may be linked with each other. For example, the data 142 may indicate where in the surrounding 13 of the vehicle 12 the particular situation described by the data 141 arises or has its origin. According to the present disclosure, the location of the surrounding may be, for example, a location associated with the particular situation such as the safety risk. The location may be indicated in any one of different well-known ways. For example, the location may be indicated by: coordinates; directional indication in relation to the vehicle 12 and/or in relation to the direction of travel of the vehicle 12; etc. The location may also point to the vehicle 12 itself, if a particular situation, which has occurred und has to be taken into account, is due to the operation and/or state of the vehicle 12 (e.g. malfunctioning of a component of the vehicle 12, specific kind of functioning of a component of the vehicle 12, etc.). The operation and/or state of the vehicle 12 may be one that may lead to a safety risk to the driver of the vehicle 12 and/or to other road user(s).

For example, if the data 141 indicates, as the particular situation associated with the vehicle 12, that another vehicle is approaching and the distance to the another vehicle may become critical, the data 142 may indicate the coordinates of the another vehicle or direction, from which the another vehicle is approaching in relation to the vehicle 12 and/or in relation to the direction of travel of the vehicle 12. Further, if the data 141 indicates, as the particular situation associated with the vehicle 12, for example, that the vehicle 12 approaches a traffic jam or another critical point or object, the data 142 may indicate the coordinates of the critical point or object or the data 142 may indicate the direction towards the critical point or object.

According to another example of the present disclosure, the information 14 indicative of the surrounding 13 of the vehicle 12 may comprise only the data 141 indicative of a particular situation, which is associated with the vehicle 12 and which the driver of the vehicle 12 should take into account when driving. This is shown in Figure 2B and may be the case, for example, if: the vehicle 12 is breaking too hard; a component of the vehicle 12 is not working properly; the vehicle 12 approaches a traffic jam; the surface of the road, on which the vehicle 12 is driving, is slippery; or the road is difficult to drive on or in poor condition.

Similarly, according to a further example of the present disclosure, the information 14 indicative of the surrounding 13 of the vehicle 12 may comprise only data 142 indicative of a location in the surrounding 13 of the vehicle 12, to which attention should be paid when driving. This is shown in Figure 2C.

The information 14 indicative of a surrounding 13 of the vehicle 12 may be information that is generated based on at least one of the following: light detection and ranging, LiDAR, information; sensor information, obtained from at least one sensor of the vehicle 12; state information, obtained from at least one component of the vehicle 12 and indicative of state of the vehicle 12; vehicle-to-everything, V2X, information; and/or image information, obtained from at least one camera of the vehicle. Thus, different data concerning the surrounding of the vehicle may be used for obtaining information 14 indicative of a surrounding 13 of the vehicle 12.

The generation of the information 14 indicative of a surrounding 13 of the vehicle 12 is performed outside the data processing apparatus 11, i.e. is not performed by the data processing apparatus 11.

The generation of the information 14 indicative of a surrounding 13 of the vehicle 12 is a resource and power consuming task because LiDAR information, state information, vehicle's sensor data, V2X information, and/or image information from at least one vehicle's camera are to be obtained and analyzed for generating the information 14 indicative of the surrounding 13 of the vehicle 12. When the data processing apparatus 11 obtains (e.g. by receiving or requesting) the information 14 and does not generate it, the data processing apparatus 11 is relieved of a lot of processing work, which otherwise would consume resources and power of the data processing apparatus 11.

According to the present disclosure, the data processing apparatus 11 may be a part of a head-mounted portable system. The head-mounted portable system may have any one of the well-known arrangements. The head-mounted portable system may be worn by the driver of the vehicle 12 on the driver's head for as part of a helmet that the driver is wearing.

Thus, when the data processing apparatus 11 obtains the information 14 indicative of a surrounding 13 of the vehicle 12 and does not generate the information 14, the head-mounted portable system, which comprises the data processing apparatus, requires less power, can be made cheaper, smaller and more lightweight. This is of a great advantage, when the driver of the vehicle 12 is wearing the head-mounted portable system, comprising the data processing apparatus 11, for obtaining improved assistance when driving the vehicle 12. Furthermore, use of heavy batteries in the head-mounted portable system may be omitted.

According to the present disclosure, the generation of the information 14 may be performed, for example, by at least one processing device, which is arranged in the vehicle 12, which is (communicatively) attached or connected to the vehicle 12, or which is arranged in a remote device such as remote server. A communicative attachment or communicative connection of the at least one processing device to the vehicle 12 may be implemented in any one of well-known ways or by use of any one of appropriate future technologies. The communicative attachment or communicative connection may be, for example, wired or wireless. Further, any one of (well-known or future) communication technologies may be used. The communication technologies may comprise, for example, Bluetooth, WiFi, NFC, Zigbee, etc. The present disclosure is not limited to a particular implementation of the communicative attachment or communicative connection between the at least one processing device and the vehicle 12.

According to the present disclosure, the head-mounted portable system may be, for example, mounted in a helmet arranged for safeguarding from injuries the head of the driver of the vehicle 12. Alternatively, the head-mounted portable system may be, for example, arrangeable to a helmet arranged for safeguarding from injuries the head of the driver of the vehicle 12. In this case, the advantages apply correspondingly also to the helmet, which then likewise requires less power, can be made cheaper, smaller and more lightweight.

As mentioned above, according to the present disclosure, the vehicle 12 may be a micro-mobility vehicle or a mini-mobility vehicle. The combination of a helmet with the data processing apparatus 11 (the head-mounted portable system) arrangement may be, for example, useful when the vehicle is a micro-mobility vehicle or a mini-mobility vehicle. Most micro-mobility and mini-mobility vehicles are less protected than, e.g., standard cars and buses and therefore their users benefit from, and are sometimes required to use, helmets. Both the micro-mobility vehicles and the mini-mobility vehicles are also less visible in traffic than larger vehicles, especially in the dark. The micro-mobility vehicles and the mini-mobility vehicles often share road space with the larger vehicles such as standard cars, buses, and trucks, which leads to an unfair "advantage" for the larger vehicles safety wise. Provision of head-mounted portable systems according to the present disclosure improve not only assistance to the drivers of the micro-mobility vehicles and the mini-mobility vehicles but also increase their safety in traffic.

Further, according to an example of the present disclosure, the vehicle 12 may be also a vehicle that is larger than a micro-mobility vehicle and a mini-mobility vehicle. The driver of the vehicle 12 may wear the head-mounted portable system and obtain the assistance via the head-mounted portable system according to the present disclosure. An example may be racing applications for larger vehicles. In the racing application, helmets may be used. A helmet may be even necessary in some racing contexts, e.g., Formula One (F1), motorbiking, rally etc. In the racing contexts, there are also weight and packaging constraints (e.g., for head-up displays (HUDs)) on the vehicle side.

Further, according to the present disclosure, the data processing apparatus 11 causes outputting, via the head-mounted portable system, at least one spatial indication associated to at least a portion of the surrounding 13 of the vehicle 12. The spatial indication may comprise an audible and/or visual spatial indication. Spatial indications/signals are generally known. In the context of a head-mounted portable system (e.g., augmented reality (AR) headset), a spatial indication/signal refers to audio and/or visual information that provides a sense of three-dimensional space to the user. This spatial information helps create a more immersive and realistic experience. Audio spatial signals aim to recreate a perception of sound coming from specific locations in a 3D space. To achieve this, different well-known methods may be used such as head-related transfer functions (HRTFs), binaural and monaural cues, and/or externalization. Visual spatial indications/signals may provide depth and/or positional information to create a three-dimensional visual experience. For outputting/displaying the visual spatial indications/signals any one of the known methods may be used (e.g., stereoscopic displays, 3D gaze estimation, depth cues, etc.). The audio spatial indication/signal and the visual spatial indication/signal may work together to create a cohesive and immersive experience. This may be implemented by using any one of the well-known methods such as synchronized audio-visual cues, dynamic adjustments etc. Generally, the at least one spatial indication output enables the driver to recognize quickly and immediately a situation and/or location that should be taken into account when driving.

For providing the visual spatial indication(s), the head-mounted portable system may comprise a displaying device. The displaying device may be, for example, a head-up display or an augmented reality, AR, head-up display. For providing the audible spatial indication(s), the head-mounted portable system may comprise at least one headphone integrated in the head-mounted portable system and/or any other appropriate and well-known means implementable in a head-mounted portable system and arranged for outputting the audible spatial indication(s).

According to the present disclosure, the at least one spatial indication, output of which is caused by the data processing apparatus 11, is associated with the obtained information 14 indicative of the surrounding 13 of the vehicle 12. Particularly, the output of the at least one spatial indication may be due to the obtaining of the information 14. As explained above, the information 14 may comprise the data 141 indicative of a particular situation, which is associated with the vehicle 12 and which the driver of the vehicle 12 should take into account when driving, and/or may comprise the data 142 indicative of a location in the surrounding 13 of the vehicle 12, to which attention should be paid when driving (e.g., for safety reasons).

Thus, according to the present disclosure, the at least one spatial indication may be arranged such that it indicates the particular situation and/or the location in the surrounding 13 of the vehicle 12. For example, for at least one of the particular situations a predetermined audible and/or visual indication/signal may exist as a particular sound or visual appearance (e.g., icon, image).

By adding visual and/or auditory feedback to the head-mounted portable system (and in some examples of the present disclosure to the helmet with the head-mounted portable system), the present disclosure increases safety for vulnerable road users (VRUs), especially in mixed traffic. An example of such feedback is advanced driver-assistance system (ADAS) related information, such as blind spot warnings. By combining visual and auditory feedback spatially, the system can direct the driver's attention toward events not necessarily in focus by the driver (grabbing their attention). The driver wearing the head-mounted portable system or the correspondingly arranged helmet may thus get situational-appropriate feedback in order to be able to make safer decisions whilst maneuvering the vehicle 12 such as a micro-mobility or a mini-mobility vehicle. If the obtained information 14, indicative of the surrounding 13 of the vehicle 12, is relevant also for other road user(s) (e.g., other vehicle driver(s)), a corresponding visual output may be provided on the outside of the head-mounted portable system and/or the helmet. This may be the case when the vehicle 12 operates in a particular way that is safety-relevant to other road user(s) or vehicle driver(s), e.g., when the vehicle 12 brakes heavily, is in a position in which it may crash, etc. In such cases, the also the surrounding traffic will benefit from the visual (e.g., light-based) indication(s) (e.g., e-HMI) on the outside of the head-mounted portable system and/or the helmet, which will be then presented in a higher location than otherwise available on the micro-mobility and mini-mobility vehicles.

According to the present disclosure, the data processing apparatus 11 may obtain head-tracking information indicative of a position, orientation, and/or movement of the head of the driver. The outputting of the spatial indication(s) may then be based on the position, orientation, and/or movement of the head of the driver. The head-tracking information may be obtained via the head-mounted portable system. For this purpose, any one of well-known methods, arranged therefore, may be used. For example, inertial measurement units (IMUs) may be used, which are sensors for measuring acceleration and rotational velocity to track head movements. Accordingly, also optical tracking may be used, where cameras in the head-mounted portable system, in the helmet, and/or in any other device of the vehicle 12 may be used to track visual markers or features in the environment. Additionally, also appropriate combinations of the well-known methods for determining the position, orientation, and/or movement of the driver's head may be used.

When the head-tracking information indicative of a position, orientation, and/or movement of the head of the driver is obtained, the data processing apparatus 11 may cause the outputting of the at least one spatial indication via the head-mounted portable system based on the position, orientation, and/or movement of the head of the driver.

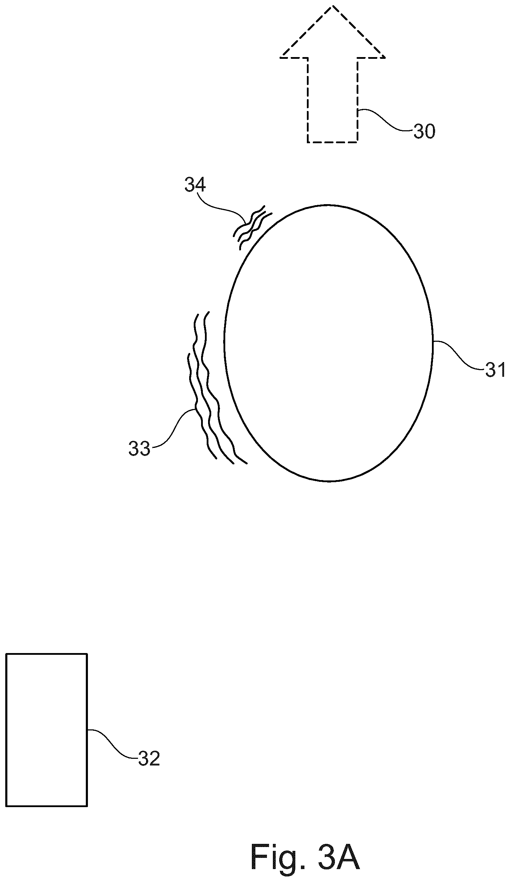

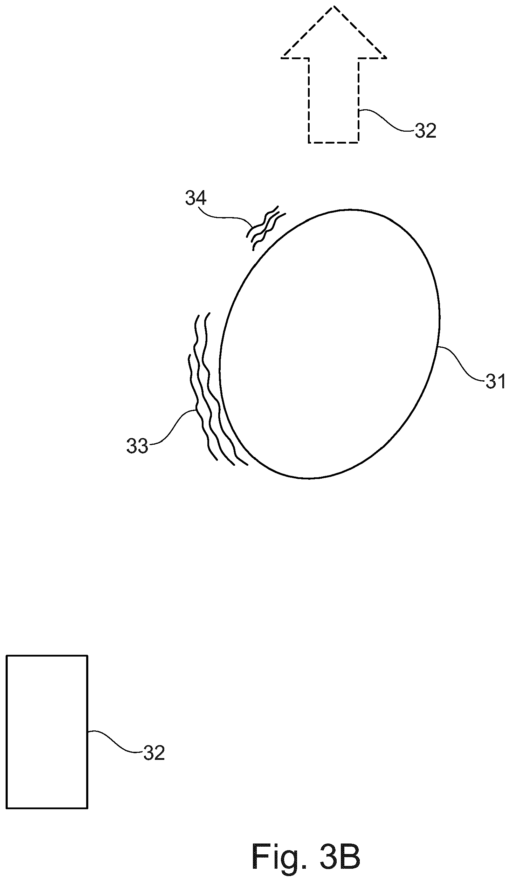

The outputting of at least one spatial indication is exemplary visualized in Figures 3A and 3B.

According to the example in Figure 3A, another vehicle 32 approaches the vehicle 12 (not shown in Figure 3A) from behind and on the left side of the vehicle 12. The driver of the vehicle 12 wears a head-mounted portable system on the head. In Figure 3A, the head of the driver, wearing the head-mounted portable system, is indicated by reference 31. According to the example and according to the present disclosure, the head-mounted portable system may be integrated in a helmet or may be arranged to the helmet. The driver 31 drives the vehicle 12 in the direction indicated by arrow 30. The approaching of the another vehicle 32 may be detected, for example, by using data of at least one sensor of the vehicle 12, data of at least one camera of the vehicle 12, LiDAR information/data, and/or V2X information/data. The detection of the approaching of the another vehicle 32 may be performed, for example, by at least one processing device, which may be arranged in the vehicle 12 or in an remote device such as server, for example. The at least one processing device arranged in the vehicle 12 or in the remote device may obtain the data of the sensor(s) of the vehicle 12, the data of the camera(s) of the vehicle 12, LiDAR information/data, and/or the V2X information/data and, based on the data, detect the approaching of the another vehicle 32. The approaching of the another vehicle 32 specifies the surrounding 13 of the vehicle 12 and is of relevance for the driver 31 of the vehicle 12 for managing the driving situation. Correspondingly, according to the example in Figure 3A, the at least one processing device generates information 14 indicative of the surrounding 13 of the vehicle 12.

The generated information 14 may comprise data 141 indicating a particular situation associated with the vehicle 12 and/or data 142 indicating a location in the surrounding 13 of the vehicle 12, to which driver's 31 attention should be paid when driving. In the example of Figure 3A, the particular situation, indicated by data 141, may be the approaching of the another vehicle 32 from behind. The location, indicated by data 142, may be the location of the another vehicle 32.

According to the example of Figure 3A, the at least one processing device provides the generated information 14, indicative of the surrounding 13 of the vehicle 12, to the data processing apparatus 11 in the head-mounted portable system worn on driver's head 31. Between the at least one processing device and the data processing apparatus 11 a communication connection/link may exist. The generated information 14 may be transmitted, by the at least one processing device, to the data processing apparatus 11 (via the communication connection). The communication connection/link may be implemented in any one of well-known ways or by use of any one of appropriate future technologies. The communication connection/link may be, for example, wired or wireless. Further, any one of (well-known or future) communication technologies may be used. The communication technologies may comprise, for example, Bluetooth, WiFi, NFC, Zigbee, etc. The present disclosure is not limited to a particular implementation of the communication connection/link.

The data processing apparatus 11 obtains the information 14 indicative of the surrounding 13 of the vehicle 12 and causes outputting, via the head-mounted portable system on the head 31 of the driver of the vehicle 12, at least one spatial indication associated to a portion of the surrounding 13 of the vehicle 12. The at least one spatial indication comprises an audible spatial indication 33 and/or a visual spatial indication 34.

Further, the at least one spatial indication 33, 34 is associated with the obtained information 14 indicative of the surrounding 13 of the vehicle 12. The output of the at least one spatial indication 33, 34 is due to the obtaining of the information 14. Correspondingly, according to the example of Figure 3A, the at least one spatial indication 33, 34 indicates the approaching of the another vehicle 32 from behind and on the left side.

When the visual spatial indication 34 is output, the visual spatial indication 34 may be output on a display device of the head-mounted portable system on driver's head 31 such as head-up display or an AR head-up display. Alternatively, the visual spatial indication 34 may be projected directly onto the retina of the driver's eye via appropriate means such as a virtual retinal display (VNA) of the head-mounted portable system. The output of the visual spatial indication 34 may indicate a portion of the surrounding 13 of the vehicle 12, where the another vehicle 32 is located, and/or the direction, from which the another vehicle 32 is approaching. The output of the visual spatial indication 34 may indicate that the another vehicle 32 is approaching the vehicle 12.

When the audible spatial indication 33 is output, the audible spatial indication 33 may be output by any one of well-known suitable technologies. For example, by a 3D audio rendering, an audio indication/signal 33 is created that may provide to the driver information on direction, from which the another vehicle 32 is approaching, and/or a distance between the vehicles 12 and 32. The output of the audible spatial indication 33 may be performed, for example by headphones integrated in the head-mounted portable system and/or by any other appropriate and well-known means of a head-mounted portable system.

As explained above, tracking of position, orientation, and/or movement of driver's head 31 may be performed via the data processing apparatus 11. In Figure 3A, the driver's head 31 is aligned in the direction 30 of travel. In Figure 3B, the driver's head 31 is turned about 20 degrees to the right. Correspondingly, in Figure 3B, the output of the at least one spatial indication 33, 34 is based on the head's 31 position in Figure 3B. In Figure 3B, the output of the at least one spatial indication 33, 34 is adapted with regard to the head's 31 position. The adaptation of the output of the at least one indication 33, 34 may be correspondingly adapted when the driver's head is moving and/or changes its orientation and/or position. The adaptation of the output comprises a continuous tracking of the head 31 in 3D space by use of any one of well-known techniques and a corresponding adaptation of the audible and/or visual spatial indication outputs 33, 34 based on the head-tracking information associated the position, orientation, and/or movement of the driver's head 31.

The examples of Figures 3A and 3B exemplary consider a situation where another vehicle 32 is approaching the vehicle 12. This situation may be safety critical for the driver of the vehicle 12 because it may be overlooked by the driver of the another vehicle 32 due to the smaller size of the vehicle 12 or due to other circumstances. Thus, the driver of the vehicle 12 is correspondingly informed on the approaching another vehicle 32. Any other relevant situation may be determined according to the present disclosure by the at least one processing device of the vehicle 12 and/or an remote device such as remote server and the driver of the vehicle 12 may receive at least one corresponding spatial indication.

As shown above, a micro-mobility vehicle 12 or a mini-mobility vehicles 12 may be equipped with adequate sensors. The sensors may be, for example, at least one of the following: a gyroscope; accelerometer; speed sensor; a global positioning system, GPS, for identifying the location/position of the vehicle; a radar; and/or a lidar. The sensors may be arranged for determining different situations, states or factors respectively, associated with the vehicle 12 such as speed, location, trajectory, possible conflicts, and/or possible crashes. The vehicle 12 may have also manually operated turn indicators. Further, the vehicle 12 may be equipped with at least one camera for capturing images of the surrounding 13 of the vehicle 12, for example. The image data, captured by the at least one camera may be also used for determining different situations associated with the vehicle 12 such as safety-relevant situations.

V2X data/ information can also be included in the function scope, collecting data from surrounding actors such as cars, VRUs, or infrastructure. Such data, however, may tend to be based on factors that are strategic rather than tactic or operational, i.e. events that happen in the future rather than immediately. Furthermore, also LiDAR information/data may be used.

When implementing a safety-relevant assistance, optimally the spatial indications may be output when the safety of vehicle's driver is to be ensured, i.e. when the driver needs to take action. This has the advantage of not disturbing the driver and/or overloading the driver with unnecessary information. Urgent (safety-relevant) information 14 may be indicated by the at least one spatial indication 33, 34 immediately and very clearly.

Hence, the sensor data from the vehicle 12 may be of higher importance for the system's performance/scope of operation, especially within urban environments with stochastic movement from VRUs. The use of the V2X may be useful as well, since fast-moving vehicles vastly reduce the time-to-collision, even if they are far away and cannot be accurately picked up by the vehicle's ego sensors. Hidden risks might also be a situation/factor, such as cars or bikes obstructed by buildings or other objects in complex environments.

Sensor fusion, decision making (what to convey) and generation of the information 14, indicative of the surrounding 13 of the vehicle 12, may be handled and generated in at least one processing device of the vehicle 12 and/or an remote device such as remote server and sent to the data processing apparatus 11 of the head-mounted portable system or helmet via a standard radio communication, for example. This reduces the need for computing and battery capacity in the data processing apparatus 11 of the head-mounted portable system or helmet. The communication may be implemented in any one of well-known ways or by use of any one of appropriate future technologies. The communication may be, for example, wired or wireless. Further, any one of (well-known or future) communication technologies may be used. The communication technologies may comprise, for example, Bluetooth, WiFi, NFC, Zigbee, etc. The present disclosure is not limited to a particular implementation of the communication.

The head-mounted portable system or the helmet may comprise an augmented reality (AR) head-up display to show corresponding visual spatial feedback(s) or indication(s) to the driver. The head-mounted portable system or the helmet may comprise speakers providing audible spatial feedback(s) or indication(s) 33, 34, to the driver. Further, light-emitting diodes (LED) may be provided on the outside of the head-mounted portable system or the helmet to provide feedback(s) or indication(s) to the surrounding traffic, e.g., if the driver brakes hard, or if turn indicators are activated. Head tracking keeps track of where the driver's head is pointing in order to offset the spatial feedback from the baseline (looking forward).

According to the present disclosure, the driver may be shown spatially visualized possible risk(s) 34 in its field of view and is therefore nudged toward safer behavior. Spatial auditory feedback(s)/indication(s) 33 may complement and enhance the experience and may alert the driver when the visual modality is overloaded, or if events of importance appear outside the current field of view of the driver.

As an example, if another vehicle 32 approaches from the back on the left-hand side, for example, an audible spatial indication/feedback 33 can appear to come from that specific location regardless of where the head is pointing (in this case forward), supported by head tracking. At the same time, light 34 can pulsate in the display of the head-mounted portable system along the left border, to further convey the apparent risk toward that direction. When the driver turns the head 31 (field of view) toward the danger, the feedback(s)/spatial indication(s) is (are) adjusted and presented accordingly, always giving clear information, reducing the driver's interaction cost.

Without the spatial indication(s)/feedback(s) 33, 34, a normal system would only be able to present diffuse information with urgency (e.g. text or icon), without being able to direct the driver to the real danger, and possible making it worse due to increased cognitive load, confusion, and/or panic. According to the present disclosure, the driver can be nudged to look where it needs to.

The spatial indication(s)/feedback(s) 33, 34 given may be tuned to be informative, yet not overload the driver. This kind of spatial feedback(s) 33, 34 provides improved tools to present the information in a calm and instructive way, relieving the driver from having to process everything in a split second.

If a phone is connected to the vehicle 12, a route planning managed by the driver of the vehicle 12 can be displayed on a display in the head-mounted portable system of in the helmet, helping the driver to navigate through traffic without taking eyes off the road, furthermore increasing both safety and convenience.

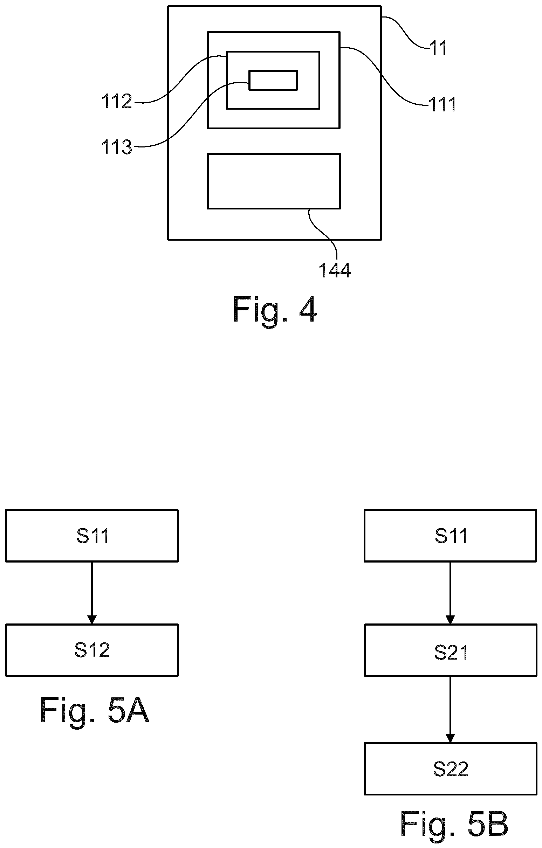

Figure 4 shows an arrangement of the data processing apparatus 11 according to an example of the present disclosure.

The data processing apparatus 11 comprises a data storage unit 111 and a data processing unit 114.

The data storage unit 111 comprises a computer-readable storage medium 112.

On the computer-readable storage medium 112, there is provided a computer program 113.

The computer program 113 and, thus, also the computer-readable storage medium 112, comprise instructions which, when executed by the data processing unit 114, or, more generally speaking, a computer, cause the computer or the data processing unit 114 to carry out a method for assisting a driver 31 of a vehicle 12 via a head-mounted portable system. The steps of the method are described exemplary above and are indicated also in Figures 5A and 5B.

Figure 5A shows steps of a method for assisting the driver 31 of the vehicle 12 via a head-mounted portable system according to an example of the present disclosure. In step S11, the information 14 indicative of the surrounding 13 of the vehicle 12 is obtained. In step S12, outputting of the at least one spatial indication 33, 34, associated to at least a portion of the surrounding 13, via the head-mounted portable system is caused. As already described herein, the spatial indication 33, 34 comprises an audible spatial indication 33 and/or a visual spatial indication 34.

Figure 5B shows steps of a method for assisting the driver 31 of the vehicle 12 via a head-mounted portable system according to an example of the present disclosure. Step S11 of Figure 5B corresponds to step S11 of Figure 5A and likewise comprises obtaining the information 14 indicative of the surrounding 13 of the vehicle 12. In step S21 of Figure 5B, head-tracking information indicative of a position, orientation, and/or movement of the head 31 of the driver. In step S22 of Figure 5B, outputting of the at least one spatial indication 33, 34, associated to at least a portion of the surrounding 13, via the head-mounted portable system is caused. Step S22 is based on the position, orientation, and/or movement of the head of the driver, obtained by executing step S21. As described herein, the spatial indication 33, 34 comprises an audible spatial indication 33 and/or a visual spatial indication 34.

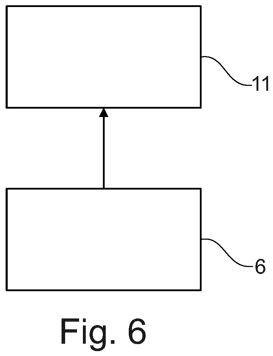

Figure 6 visualizes an exemplary processing device 6 for providing the information 14 indicative of the surrounding 13 of the vehicle 12 to the data processing apparatus 11. Figure 6 shows only one processing device 6 for the sake of conciseness. According to the present disclosure, more than one processing device 6 may be implemented for providing the information 14 to the vehicle 12. According to the present disclosure, the processing device 6 may be arranged in the vehicle 12 or in a remote device such as remote server or the processing device 6 may be attached or connected to the vehicle 12. The processing device 6 may generate the information 14 indicative of a surrounding 13 of the vehicle 12. For generating the information 14, the processing device 6 may be arranged to obtain the following data: LiDAR information/data, sensor information, obtained from at least one sensor of the vehicle 12; state information, obtained from at least one component of the vehicle 12 and indicative of state of the vehicle 12; V2X information/data; and/or image information, obtained from at least one camera of the vehicle 12. Thus, the processing device 6 may obtain data that is associated with the vehicle 12 and with the surrounding 13 of the vehicle 12, analyze the data, and, by analyzing the data, determine whether or not a situation has occurred that should be reported to the driver 31 of the vehicle 12. If a situation (e.g., a driving-security relevant situation) has occurred that should be reported to the driver 31 of the vehicle 12, the processing device 6 generates corresponding information 14 indicative of the surrounding 13 of the vehicle 12 and provides the information 14 to the data processing apparatus 11, which may be a part of a head-mounted portable system (e.g., a head-mounted portable system integrated in or arrangeable to a helmet), as described herein. For providing the information 14 to the data processing apparatus 11, a communication connection/link may be established between the processing device 6 and the data processing apparatus 11. The communication connection/link may be implemented in any one of well-known ways or by use of any one of appropriate future technologies. The communication connection/link may be, for example, wired or wireless. Further, any one of (well-known or future) communication technologies may be used. The communication technologies may comprise, for example, Bluetooth, WiFi, NFC, Zigbee, etc. The present disclosure is not limited to a particular implementation of the communication connection/link.

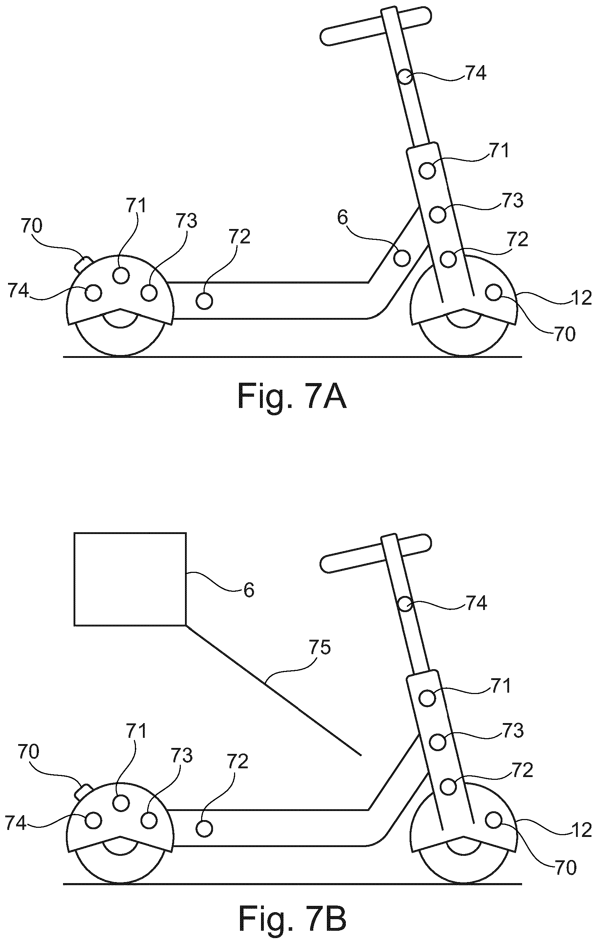

Figure 7A visualizes an exemplary arrangement of the vehicle 12 according to an example of the present disclosure. In Figure 7A, shows exemplary an e-scooter as the vehicle 12. However, as explained above, the present disclosure is not limited to e-scooters only. The vehicle 12 may be, for example, any one of the different micro-mobility or mini-mobility vehicles.

The vehicle 12 of the example of Figure 7A comprises at least one of the following: at least one component 70 configured for obtaining LiDAR information, at least one sensor 71 configured for obtaining sensor information; at least one component 72 configured for obtaining information indicative of a state of the vehicle 12; at least one communication system 73 configured for obtaining V2X information; and/or at least one camera 74 for obtaining image information. The vehicle 12 of Figure 7A comprises the processing device 6.

The at least one component 70 configured for obtaining light detection and ranging, LiDAR, information may be a component that causes executing LiDAR sensing and, thereby, obtains LiDAR information/data. LiDAR is a well-known remote sensing method for determining distances to objects in a surrounding 13. Generally, the execution of the LiDAR sensing comprises emitting objects with a laser and measuring the time for the reflected light to return to the sensor/receiver receiving the reflected light. By calculating the time, precise distances to objects are determined. Thus, LiDAR information will comprise information on detected object(s) in the surrounding 13 of the vehicle 12 and the respective distance(s) to the detected object(s).

The at least one sensor 71 may be any one of the sensors of the vehicle 12, data of which may be used for inferring or determining vehicle's state and/or for identifying traffic situations associated the vehicle 12 (e.g., safety-relevant situations). The at least one sensor 71 may be, for example, a gyroscope; accelerometer; speed sensor; a global positioning system, GPS, for identifying the location/position of the vehicle 12; a radar; and/or a lidar. The at least one sensor 71 may be arranged for determining different factors and situations, associated with the vehicle 12, such as speed, location, trajectory, possible conflicts, and/or possible crashes. The sensors 71 of a vehicle 12 are well-known and, similarly, also methods for inferring or determining vehicle's state and/or for identifying different situations associated the vehicle 12 (e.g., safety-relevant situations) are well-known as well. Any one of the well-known sensors and/or the well-known methods may be utilized according to the present disclosure.

Thet least one component 72, configured for obtaining information indicative of a state of the vehicle 12, may be arranged to obtain information on any one of possible states of the vehicle 12. The different states of the vehicle 12 may comprise, for example: operational states (e.g., engine on or engine off), service states, availability states, battery states, telematic states, etc. The service states may be any one of the well-known states such as operational (e.g., vehicle 12 is fully functional and available for use), out of order (e.g., vehicle 12 cannot be used due to maintenance or other issues), and/or relocate (e.g., vehicle 12 is operational but needs to be moved from a restricted area). The availability states may be for example available state (e.g., the vehicle 12 meets conditions for availability (e.g., operational, sufficient battery level, and/or internet of things (IoT) device online, etc.)) or unavailable state (e.g., any of the conditions for availability are not met (e.g., low battery level and/or IoT device offline, etc.)).

The at least one communication system 73, configured for obtaining V2X information, enables the vehicle 12 to exchange information with various entities in the surrounding 13 of the vehicle 12. The V2X information and the ways on how the V2X information is obtained are well known. The V2X information may be used for obtaining, inferring, or detecting different situations (e.g., safety-relevant situations) in the surrounding 13 of the vehicle 12.

The least one camera 74 is arranged for capturing images in the surrounding 13 of the vehicle 12. The image information in the captured images may be analyzed by utilizing different (well-known) image processing methods. The analysis may detect different situations associated with the vehicle 12 (e.g., passing vehicles, approaching vehicles, objects in the vicinity and/or on the road, and/or road conditions, etc.).

According to the example of Figure 7A, the processing device 6, arranged for generating the information 14 indicative of the surrounding 13 of the vehicle 12, is implemented in the vehicle 12 or is at least connected to the vehicle 12 via an appropriate interface. The processing device 6 obtains, from the at least one of the above-mentioned components 71, 72, 73, 74 of the vehicle 12, data/information, which the device 6 may use (e.g., analyze and/or combine) for determining at least one situation or state associated with the vehicle 12 and/or with vehicle's surrounding 13, as described above. For this, different (also well-known) methods may be used by the processing device 6. The components 71, 72, 73, 74 of the vehicle 12 are directly or indirectly connected to the processing device 6 for providing their respective data/information (obtained by the components 71, 72, 73, 74). Upon generating the information 14 indicative of the surrounding 13 of the vehicle 12, the processing device 6 provides the information 14 to the data processing apparatus 10, as described above.

Thus, the vehicle 12 of Figure 7A is arranged for: obtaining information 14 indicative of a surrounding 13 of the vehicle 12; and causing a head-mounted portable system to carry out the steps of the method explained above. See further steps in Figures 5A and 5B.

Figure 7B visualizes a further exemplary arrangement of the vehicle 12 according to an example of the present disclosure. The arrangement of the vehicle 12 is essentially the same as in Figure 7A. Also in Figure 7B, the vehicle 12 is an e-scooter, which may comprise any one of the components 71, 72, 73, 74. The difference between the arrangements of the vehicle 12 in examples of Figures 7A and 7B lies in the processing device 6. While in the example of Figure 7A the processing device 6 is implemented in the vehicle 12 or is at least connected to the vehicle 12 via an appropriate interface, in the example of Figure 7B the processing device 6 is a device that is remote to the vehicle 12. The processing device 6 may be implemented in or as a server, for example.

In the example of Figure 7B, a communication connection/link 75 is established between the processing device 6 and the vehicle 12. For this, the vehicle 12 may comprise a corresponding communication interface or device that enables data exchange between the processing device 6 and the vehicle 12 (e.g., the components of 71, 72, 73, 74 of the vehicle 12). Thus, in the example of Figure 7B, the processing device 6 obtains via the communication link 75 the respective data/information from the at least one of the components 71, 72, 73, 74 of the vehicle 12 that the processing device may use (e.g., analyze and/or combine) for determining at least one situation or state associated with the vehicle 12 and/or with vehicle's surrounding 13, as described above. Upon generating the information 14 indicative of the surrounding 13 of the vehicle 12, the processing device 6 provides the information 14 to the data processing apparatus 10, as described above. As explained above, the communication connection/link 75 may be implemented in any one appropriate way and the present disclosure is not limited to a particular implementation of the communication connection/link 75.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 11: data processing apparatus
- 111: data storage unit
- 112: computer-readable storage medium
- 113: computer program
- 114: data processing unit
- 12: vehicle
- 13: surrounding of the vehicle
- 14: information indicative of the surrounding of the vehicle
- 141: data indicative of a particular situation associated with the vehicle
- 142: data indicative of a location in the surrounding of the vehicle
- 30: driving direction
- 31: driver wearing a head-mounted portable system on the head
- 32: another vehicle
- 33: audible spatial indication
- 34: visual spatial indication
- S 11: step of obtaining information indicative of a surrounding of a vehicle
- S12: step of causing outputting at least one spatial indication
- S21: step of obtaining head-tracking information
- S22: step of outputting at least one spatial indication based on head-tracking information
- 6: processing device
- 70: component for obtaining LiDAR information
- 71: sensor of a vehicle
- 72: component for obtaining information on state of the vehicle
- 73: communication system for obtaining V2X information
- 74: camera of a vehicle
- 75: communication connection/link

## Claims

1. A method for assisting a driver of a vehicle (12) via a head-mounted portable system, wherein the method comprises:
- obtaining (S1 1) information (14) indicative of a surrounding (13) of the vehicle (12);
- causing outputting (S12, S22), via the head-mounted portable system, at least one spatial indication (33, 34) associated to at least a portion of the surrounding (13), wherein the spatial indication comprises an audible (33) and/or visual spatial indication (34).

2. The method according to claim 1, wherein the method comprises obtaining (S21) head-tracking information indicative of a position, orientation, and/or movement of the head of the driver and wherein the outputting (S22) of the at least one spatial indication (33, 34) is based on the position, orientation, and/or movement of the head of the driver.

3. The method according to claim 1 or 2, wherein the vehicle (12) is a micro-mobility vehicle or a mini-mobility vehicle.

4. The method according to claim 3, wherein the head-mounted portable system is integrated in a helmet arranged for safeguarding from injuries the head of the driver of the vehicle (12).

5. The method according to claim 3, wherein the head-mounted portable system is arrangeable to a helmet arranged for safeguarding from injuries the head of the driver of the vehicle (12).

6. The method according to any one of the preceding claims, wherein the visual spatial indication (33, 34) is output by a displaying device of the head-mounted portable system.

7. The method according to claim 4 or 5, wherein the displaying device is a head-up display or an augmented reality, AR, head-up display.

8. The method according to any one of the preceding claims, wherein the information comprises information generated based on at least one of the following:
- light detection and ranging, LiDAR, information;
- sensor information, obtained from at least one sensor (71) of the vehicle (12);
- state information, obtained from at least one component (72) of the vehicle (12) and indicative of state of the vehicle (12);
- vehicle-to-everything, V2X, information; and/or
- image information, obtained from at least one camera (74) of the vehicle (12).

9. A data processing apparatus (11) comprising means for carrying out the steps of a method according to any one of the preceding claims.

10. A computer program (113) comprising instructions which, when the program (113) is executed by a computer, cause the computer to carry out the steps of a method according to any one of the preceding claims 1 to 8.

11. A computer-readable storage medium (112) comprising instructions which, when executed by a computer, cause the computer to carry out the steps of a method according to any one of the preceding claims 1 to 8.

12. A head-mounted portable system comprising a data processing apparatus (11) according to claim 9 or means for carrying out the steps of a method according to any one of the preceding claims 1 to 8.

13. A vehicle (12) arranged for:
- obtaining information (14) indicative of a surrounding (13) of the vehicle (12); and
- causing a head-mounted portable system to carry out the steps of a method according to any one of claims 1 to 8 by providing the information to the head-mounted portable system.

14. The vehicle (12) according to claim 13, the vehicle (12) comprising:
- at least one component (70) configured for obtaining light detection and ranging, LiDAR, information;
- at least one sensor (71) configured for obtaining sensor information;
- at least one component (72) configured for obtaining information indicative of a state of the vehicle (12);
- at least one communication system (73) configured for obtaining vehicle-to-everything, V2X, information; and/or
- at least one camera (74) for obtaining image information.

15. A system comprising a vehicle (12) according to claim 13 or 14 and a head-mounted portable system according to claim 12.
